(19) Europäisches Patentamt
European Patent Office
Office européen des brevets

(11) **EP 4 015 990 A1**

(12) **EUROPEAN PATENT APPLICATION**
published in accordance with Art. 153(4) EPC

(43) Date of publication:
**22.06.2022 Bulletin 2022/25**

(21) Application number: **20852820.8**

(22) Date of filing: **27.07.2020**

(51) International Patent Classification (IPC):
*G01B 11/245* (2006.01)      *G01C 3/06* (2006.01)
*H04N 17/00* (2006.01)      *H04N 13/246* (2018.01)

(52) Cooperative Patent Classification (CPC):
**G01B 11/245; G01C 3/06; G06T 1/00;**
**H04N 13/246; H04N 17/00**

(86) International application number:
**PCT/JP2020/028624**

(87) International publication number:
**WO 2021/029206 (18.02.2021 Gazette 2021/07)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **14.08.2019 JP 2019148804**

(71) Applicant: **Hitachi Astemo, Ltd.**
**Ibaraki 312-8503 (JP)**

(72) Inventors:
• **MATONO Haruki**
  **Tokyo 100-8280 (JP)**
• **AOKI Toshiyuki**
  **Tokyo 100-8280 (JP)**
• **OSATO Takuma**
  **Tokyo 100-8280 (JP)**

(74) Representative: **Mewburn Ellis LLP**
**Aurora Building**
**Counterslip**
**Bristol BS1 6BX (GB)**

(54) **IMAGE PROCESSING DEVICE**

(57)      Provided is an image processing device capable of detecting and correcting a deviation between an imaging element and a lens with minimal computational complexity and good precision. A pair of images are acquired from a pair of cameras, a first one region is determined from one image between the pair of images, a first other region corresponding to the first one region is retrieved from the other image, a first deviation between the first one region and the first other region is acquired, a second one region different from the first one region is determined from the one image, a second other region corresponding to the second one region is retrieved from the other image, a second deviation between the second one region and the second other region is acquired, and a geometric correction value for each pixel of the images is determined from the first deviation and the second deviation.

*FIG. 3*

**Description**

Technical Field

The present invention relates to an image processing device, a camera system using the image processing device, a method for producing geometric correction value data, and a program for obtaining a geometric correction value.

Background Art

A background art in this technical field includes PTL 1. This gazette described that, as an object, "provided are a calibration deviation correction device capable of easily and quantitatively correct a calibration deviation of an image capturing device, which captures stereo images and performs 3D measurement and the like, as an absolute value, and a stereo camera and a stereo camera system equipped with the calibration deviation correction device". As a solution, it is described that "in a calibration deviation correction device that corrects a calibration deviation of an image capturing device, which captures stereo images, calibration data related to an image capturing device 11 is stored in a calibration data storage device 8. Features are extracted by a feature extraction device 5 from the stereo images captured by the image capturing device 11. Then, the calibration deviation regarding the calibration data stored in the calibration data recording device 8 is corrected by a calibration data correction device 1 based on the features extracted by the feature extraction device 5."

Citation List

Patent Literature

PTL 1: JP 2004-354257 A

Summary of Invention

Technical Problem

In PTL 1, the calibration deviation can be quantitatively corrected as the absolute value by analyzing the stereo images with the calibration of the image capturing device that captures the stereo images and performs the three-dimensional measurement or the like even if there is a mechanical deviation such as aging and impact vibration. However, there is a problem that it is difficult to correct a deviation between an imaging element such as a CMOS sensor and a CCD sensor of the image capturing device and a lens with minimal computational complexity.

The present invention has been made in view of the above problem, and an object thereof is to provide an image processing device capable of detecting and correcting a deviation between an imaging element and a lens with minimal computational complexity and good precision.

Solution to Problem

In order to achieve the above object, an image processing device according to the present invention acquires a pair of images from a pair of cameras, determines a first one region from one image between the pair of images, retrieves a first other region corresponding to the first one region from the other image, acquires a first deviation between the first one region and the first other region, determines a second one region, different from the first one region, from the one image, retrieves a second other region corresponding to the second one region from the other image, acquires a second deviation between the second one region and the second other region, and determines a geometric correction value for each pixel of the images from the first deviation and the second deviation.

Advantageous Effects of Invention

According to the present invention, it is possible to detect and correct the deviation between the imaging element, such as a CMOS and a CCD, and the lens with minimal computational complexity and good precision.

Other objects, configurations, and effects which have not been described above become apparent from embodiments to be described hereinafter.

Brief Description of Drawings

[FIG. 1] FIG. 1 explanatory view of a parallax error when a stereo camera deviates in the vertical direction.
[FIG. 2] FIG. 2 is an explanatory view illustrating an overall configuration of an obstacle sensing system (in-vehicle stereo camera system) using an image processing device according to a first embodiment.
[FIG. 3] FIG. 3 is an explanatory diagram illustrating a configuration of the image processing device according to the first embodiment.
[FIG. 4] FIG. 4 is an explanatory view of a processing region.
[FIG. 5] FIG. 5 is an explanatory diagram illustrating a configuration of an image processing device provided with reliability according to a second embodiment.
[FIG. 6] FIG. 6 is an explanatory diagram illustrating a configuration of an image processing device provided with an accumulation unit according to a third embodiment.
[FIG. 7] FIG. 7 is an explanatory diagram illustrating a configuration of an image processing device according to a fourth embodiment.

Description of Embodiments

Hereinafter, embodiments of the present invention will be described with reference to the drawings.

[First Embodiment]

Prior to the description of an image processing device of the present embodiment, a camera system (stereo camera system) using the image processing device and a parallax error/distance error generated in the camera system will be outlined.

A stereo camera system is well known as a means for estimating a three-dimensional position of an object. In the stereo camera system, a camera as an image-capturing device is arranged at a plurality of positions to image the same object from a plurality of different viewpoints, and a deviation in appearance in the obtained images, that is, a distance from parallax to the target object is calculated.

In a typical stereo camera system using a stereo camera including two (a pair of) cameras, such conversion is expressed by Formula 1 below.

[Formula 1]

$$Z = \frac{f}{w}\frac{B}{D}$$

$$\ldots \text{(Formula 1)}$$

Here, Z [mm] represents a distance to the target object, f [mm] represents a focal length, w [mm/px] represents a pixel pitch, B [mm] represents a distance between cameras (baseline length), and D [px] represents parallax.

When the parallax is calculated, the images captured from the plurality of positions are arrayed horizontally, and for a specific point in a left image, for example, a position at which the same point is imaged in a right image is retrieved. A parallelization process is generally performed in advance in order to perform such retrieval efficiently.

Parallelization means alignment of an image in a longitudinal direction. That is, the parallelization process is a process of calibrating images such that the same point is imaged at the same height on the left and right images. In the parallelized images, it is only necessary to retrieve a certain horizontal row at the time of retrieving a corresponding point, and the processing efficiency is high. However, parameters for parallelization change due to an error during assembly and deterioration over time, and even the left and right images that have undergone the parallelization process may have a deviation in the vertical direction (up-down direction) (also referred to as a vertical deviation or height deviation). At this time, a texture similar to a different height is imaged particularly in a region where a straight line in an oblique direction is imaged, and thus, an erroneous corresponding point is detected, and an error occurs in a three-dimensional position.

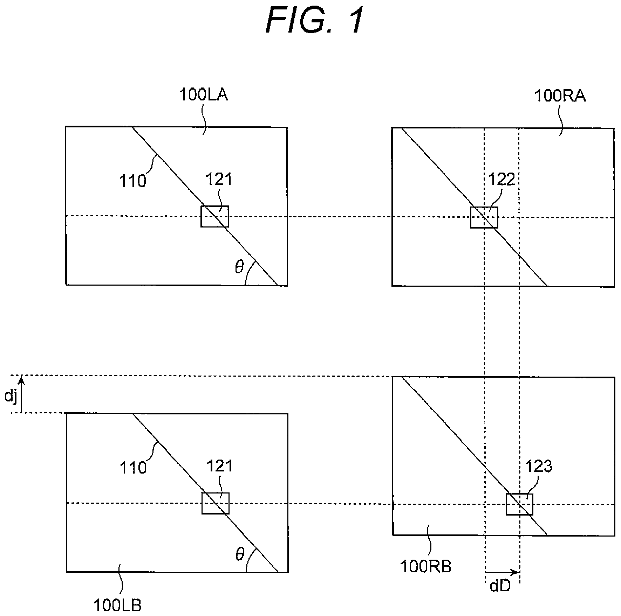

FIG. 1 is an explanatory view of a parallax error dD [px] when a deviation of dj [px] (pixel deviation) occurs in the vertical direction. Upper views of FIG. 1 illustrate a case where a height deviation does not occur between a left image 100LA (an image obtained by performing the parallelization process on an image acquired from a left camera) and a right image 100RA (an image obtained by performing the parallelization process on an image acquired from a right camera). A deviation amount of an image position between a retrieval target 121 in the left image 100LA and a matching target 122, which is obtained by retrieving and matching a position where the same object is imaged from the right image 100RA, is obtained as parallax.

On the other hand, lower views of FIG. 1 illustrate a case where a height deviation occurs between the left image 100LB and the right image 100RB. The deviation amount of the image position of the matching target 123 with respect to the same retrieval target 121 is obtained as parallax. At this time, a deviation between positions of the matching target 122 and the matching target 123 occurs as the parallax error dD [px]. Assuming that a slope of a straight line 110 with respect to the horizontal direction is θ [rad], the parallax error dD is expressed by the following Formula 2.

[Formula 2]

$$dD = \frac{dj}{tan\theta}$$

$$... \quad (Formula\ 2)$$

That is, when a certain vertical deviation dj occurs, the parallax error dD becomes a function of the slope θ of the straight line 110, and it can be seen that dD increases as θ is close to zero, that is, close to horizontal.

Further, from Formula 1, a distance error dZ [mm] when the parallax error dD occurs is expressed by the following Formula 3.

[Formula 3]

$$dZ = \frac{fB}{w}\left(\frac{dD}{D(D + dD)}\right)$$

$$... \quad (Formula\ 3)$$

Since f, B, and w are fixed depending on a camera, it can be seen that the distance error dZ accompanying the parallax error dD increases as the parallax D decreases.

The image processing device of the present embodiment will be described by taking an obstacle sensing system (in-vehicle stereo camera system) in which the above-described stereo camera system is applied to a vehicle as an example. Incidentally, the image processing device of this example is not limited to such a field, and it is a matter of course that the image processing device can be applied to various systems such as a monitoring system for monitoring an intrusion of a suspicious person or an abnormality.

<Obstacle Sensing System (In-Vehicle Stereo Camera System)>

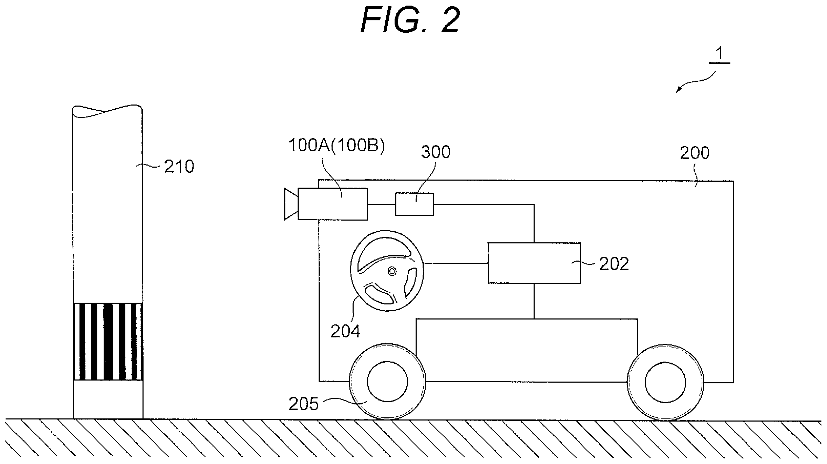

FIG. 2 is an overall configuration diagram of an obstacle sensing system 1 in which a pair of left and right cameras 100A and 100B constituting a stereo camera and an image processing device 300 are installed on a windshield of a vehicle 200.

The cameras 100A and 100B have imaging elements such as a CMOS and a CCD, and are arranged side by side (specifically, such that centers of optical axes are parallel) so as to image the periphery of the vehicle 200 (in this example, the front side). Incidentally, the camera 100A and the camera 100B may be referred to as a left camera and a right camera, respectively, hereinafter.

The image processing device 300 performs predetermined image processing on a pair of images captured (acquired) by the cameras 100A and 100B and is configured as a microcomputer equipped with a central processing unit (CPU), memory, and the like (hereinafter referred to as a microcomputer), and the CPU executes various processes to be described below according to instructions of a program stored in the memory.

Further, a vehicle information ECU 202 is installed in the vehicle 200. The vehicle information ECU 202 is a control device that acquires vehicle information from various sensors and the like mounted on the vehicle 200 and comprehensively controls operations of the vehicle 200, and is configured as a microcomputer including a CPU, a memory, and the like similarly to the image processing device 300.

In this example, the image processing device 300 is connected to the vehicle information ECU 202, and a steering device 204 and a brake control device 205 can perform steering control and acceleration/deceleration control according to instructions of the vehicle information ECU 202. For example, when an obstacle 210 (for example, a utility pole, another vehicle, or the like) is detected by (images of) the cameras 100A and 100B, a position of the obstacle 210 is detected by the image processing device 300, and a result obtained by measuring a distance to the obstacle 210 is transmitted from the image processing device 300 to the vehicle information ECU 202. If the vehicle 200 is likely to collide with the detected obstacle 210, the vehicle information ECU 202 can reduce damage of the collision by giving a brake instruction or a steering instruction to the brake control device 205 or the steering device 204.

<Image Processing Device>

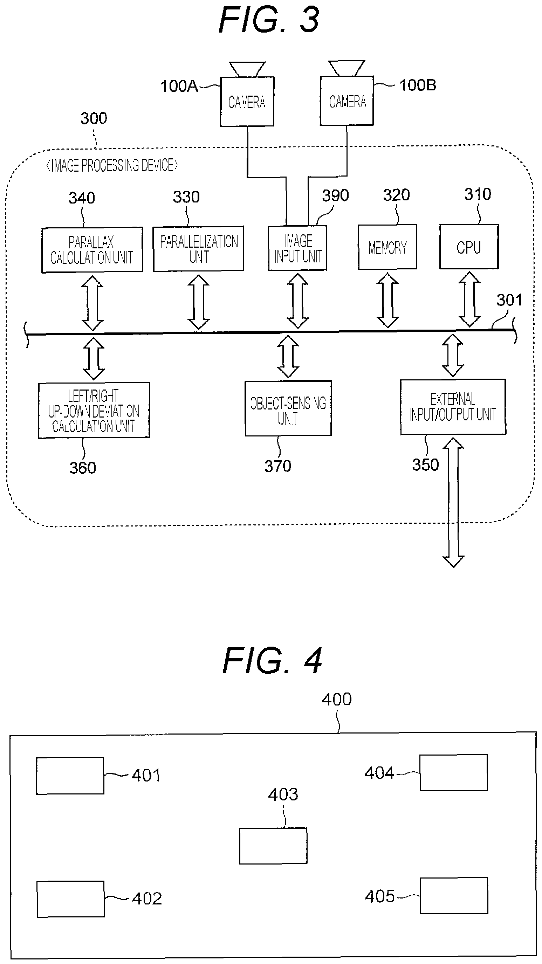

FIG. 3 illustrates a configuration of the image processing device 300 according to the present first embodiment.

As illustrated in FIG. 3, the image processing device 300 includes a CPU 310, a memory 320, an image input unit 390, a parallelization unit 330, a parallax calculation unit 340, a left/right up-down deviation calculation unit 360, an object-sensing unit 370, and an external input/output unit 350. The respective components constituting the image processing device 300 are connected to be capable of communicating via a communication line 301.

The image input unit 390 is an interface configured to input data (images) output from the cameras 100A and 100B which are external video data output devices. In the case of the stereo camera, if videos obtained by the left and right cameras synchronized to perform capturing at the same time are input, a distance to an object (target object) reflected in the videos can be obtained more precisely.

The data (image) input by the image input unit 390 is stored in the memory 320.

The parallelization unit 330 performs a process of correcting an attachment position, distortion caused by a lens, and the like such that left and right images (the left image captured by the left camera 100A and the right image captured by the right camera 100B) input by the image input unit 390 are parallel. Incidentally, a known method can be used as a parallelization processing method here.

The parallax calculation unit 340 performs block matching on the left and right parallelized images (corrected images) output from the parallelization unit 330, and calculates parallax for each pixel.

The object-sensing unit 370 extracts a region of an object by using parallax data output from the parallax calculation unit 340 and an output result of the parallelization unit 330. Methods for extracting the region of the object include a method of converting parallax data into distance data and grouping regions with a short distance, a method of detecting a pattern of a person or a car from image data of the parallelization unit 330, and the like. In the case of the method of grouping regions with a short distance, it is difficult to perform the grouping and detect the object if a distance of each image has not been measured precisely. This occurs because there is a difference between a correction value corrected by the parallelization unit 330 and a physical position due to an installation position of the camera, a positional deviation between an imaging element and a lens, and the like. Here, when a lens with a large distortion is used, influence of the positional deviation between the lens and the imaging element increases as the amount of correction of the distortion increases. Assuming that a lens with a large distortion has a magnification correction value, which is twice that of a central portion of an image, in a peripheral portion of the image at the time of parallelization as an example, a deviation of two pixels occurs if the lens and the imaging element are shifted by one pixel.

Therefore, the left/right up-down deviation calculation unit 360 is mounted as a means for precisely and easily obtaining the positional deviation between the imaging element and the lens in the present embodiment.

The left/right up-down deviation calculation unit 360 retrieves a region corresponding to a part of the right image from the left image, and calculates a deviation amount (pixel deviation). in the up-down direction (vertical direction). Specifically, the left/right up-down deviation calculation unit 360 determines a plurality of regions (one region) having a predetermined shape from the right image (one image) between the left and right parallelized images, input from the image input unit 390 and parallelized by the parallelization unit 330, retrieves a plurality of regions (the other region) having a predetermined shape corresponding to the regions (one region) of the right image from the left image (the other image), acquires a deviation (pixel deviation) in the up-down direction (vertical direction) between each of the regions (one region) of the right image and each of the regions (the other region) of the left image, and determines a geometric correction value for each pixel of the left and right images (corresponding to a distortion correction table) from a plurality of the acquired deviations (pixel deviations).

Incidentally, the processing of the left/right up-down deviation calculation unit 360 here uses the right image as the reference, but may be performed conversely (that is, use the left image as the reference).

Regions (processing regions) for calculating the deviation amount will be described with reference to FIG. 4. In FIG. 4, 400 represents a right image after parallelization. 401 to 405 represent approximate positions of five regions. 401, 402, 404, and 405 are regions of peripheral portions of the image (in other words, regions including four points in all quarters around the center of the optical axis), and 403 is a region of a central portion of the optical axis of the image (in other words, the region including the center of the optical axis). A description will be given by taking a lens with which peripheral portions are imaged to be reduced in half as compared with a central portion of an optical axis as an example. The parallelization unit 330 corrects the peripheral portion to be enlarged about twice in order to correct distortion. The central portion of the optical axis is not distorted, and thus, does not need to be enlarged and has the same magnification. Here, an example in which the imaging element and the lens are deviated by one pixel to the right in the horizontal direction will be described. Since the distortion correction table is the same, an up-down deviation generated as the imaging element and the lens are shifted to the right in the horizontal direction is zero in 403, which is the central portion of the optical axis, is (deviation occurs) upward in 401, downward in 402, downward in 404, and upward in 405. This is because the correction value changes radially around the optical axis, and the correction value becomes large particularly in the periphery in the distortion correction table. When the imaging element and the lens deviate, a correction position deviates so that the deviation occurs as described above. Similarly, when the imaging element and the lens deviate in the vertical direction, the horizontal direction, and a direction in which an interval between the lens and the imaging element deviates (that is, a substantially optical axis center direction), deviating patterns thereof are different. Therefore, a direction of the deviation between the imaging element and the lens can be identified by deviation patterns in the regions 401 to 405, and the amount of displacement in a positional relation between the imaging element and the lens can be measured from the correction value of distortion correction and the deviation amount.

For example, if a pattern indicating a relation between the deviation of each of the regions 401 to 405 and the geometric correction value (corresponding to the distortion correction table) for each pixel of the left and right images is measured in advance, the geometric correction value for each pixel of the left and right images can be determined from the deviations of the plurality of processing regions based on the pattern.

Here, as long as the similarity can be evaluated by Sum of Squared Difference (SAD) for one region with an image name of the other and a correlation can be clarified in a left/right up-down deviation calculation method, the method is not limited in the present embodiment.

The distortion correction table can be corrected in both the vertical and horizontal directions by observing the vertical deviation between the left and right images in the plurality of regions as described above and comparing and collating the deviation with the pattern measured in advance, for example. Regarding correction in the horizontal direction, it is also possible to capture an image of a marker at a known distance and correct the distortion correction table by a deviation of the distance. However, it is difficult to perform correction during traveling of a car or the like, and thus, a correction method that does not depend on a subject is preferable. The correction method of the present embodiment can correct the distortion correction table for any subject, and thus, can be used even during traveling.

Incidentally, the geometric correction value is a value for correction to an image obtained when distortion of the imaging element, errors of focal lengths of the cameras 100A and 100B, an error of an optical axis position on an image, and an attachment error are all zero.

The external input/output unit 350 outputs a result of the object detection performed by the object-sensing unit 370 (for example, to the vehicle information ECU 202). Accordingly, when it is determined that the vehicle 200 is likely to hit the obstacle 210 (for example, a utility pole, another vehicle, or the like), it is possible to perform control such as applying a brake and turning the steering.

As described above, the processing in the left/right up-down deviation calculation unit 360 described above is performed according to the first embodiment, so that the deviation between the imaging element such as a CMOS and a CCD and the lens can be detected and corrected with minimal computational complexity and good precision, and the distance precision can be maintained even if the camera is deformed after the attachment of the camera. The effect is particularly great when the lens with a large distortion is used.

[Second Embodiment]

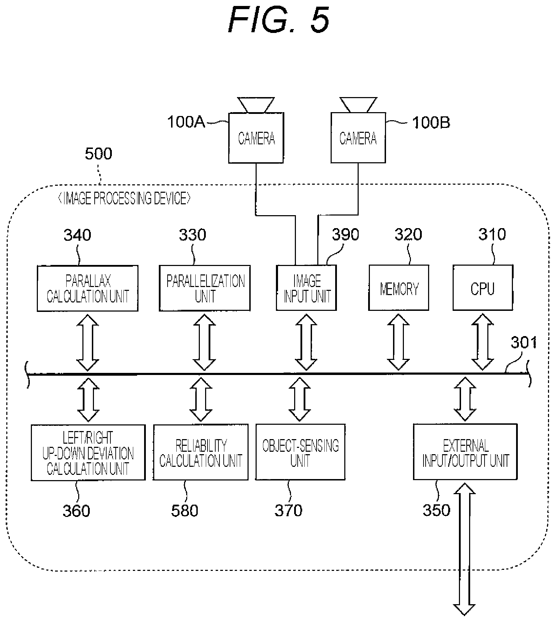

Next, a second embodiment in which a robust correction method is implemented in the actual environment will be described with reference to FIG. 5.

A basic configuration of an image processing device 500 of the second embodiment is almost the same as that of the image processing device 300 of the first embodiment described above, but a reliability calculation unit 580 is added to the configuration of the first embodiment. The reliability calculation unit 580 is a block that calculates how reliable matching of the left/right up-down deviation calculation unit 360 is (that is, the reliability of a deviation of each region of left and right images). The left/right up-down deviation calculation unit 360 refers to the reliability calculated by the reliability calculation unit 580, updates a geometric correction value for the parallelization unit 330 if the reliability output from the reliability calculation unit 580 is high and does not perform the update if not, or can prevent erroneous correction when an image temporarily deteriorates during traveling by updating the geometric correction value to be weighted in accordance with the reliability and updating. As a method for calculating the reliability here, a dispersion value of a brightness distribution or an edge intensity of a portion used for matching of the left/right up-down deviation calculation unit 360, and a correlation value of a matching position may be used.

In this manner, the geometric correction value (corresponding to a distortion correction table) for each pixel of the left and right images is determined in accordance with the reliability of the deviation calculated by the reliability calculation unit 580 according to the second embodiment, and thus, a deviation between an imaging element such as a CMOS and a CCD and a lens can be detected and corrected more precisely, and higher distance precision can be maintained.

[Third Embodiment]

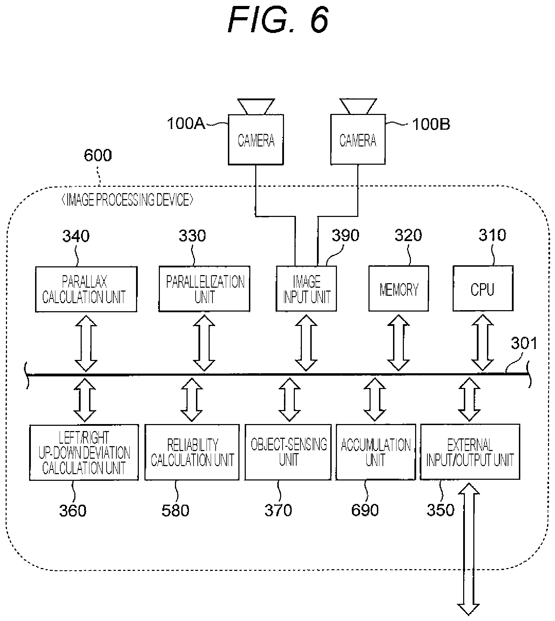

Next, a third embodiment in which structural deformation is robustly detected instead of short-term deformation, such as a temperature change, in the actual environment will be described with reference to FIG. 6.

FIG. 4 illustrates the example of calculating the deviation amount for the five regions. However, it is easier to grasp the tendency of the deviation as the number of these regions increases. For example, when a deviation amount of one of the regions is not calculated correctly due to the influence of noise or the like, the region is excluded from targets of the calculation as noise so that robustness is improved. Further, the regions of FIG. 4 are not always in a state where it is easy to calculate the deviation amount. For example, the surrounding environment is monotonous during traveling on a highway, and thus, the sky is constantly reflected at the top of a screen. Then, shading of an image is small in the sky, and it is difficult to calculate an up-down deviation. In such a case, it becomes possible to calculate the up-down deviation at an early stage by shifting regions to measure the deviation amount.

In order to realize such processing, an accumulation unit 690 is added to the configuration of the second embodiment in the third embodiment. Incidentally, the other configurations of an image processing device 600 of the third embodiment are substantially the same as those of the image processing device 500 of the second embodiment described above. The accumulation unit 690 holds a deviation amount for each image coordinate of processing targets calculated by the left/right up-down deviation calculation unit 360, and instructs the left/right up-down deviation calculation unit 360 to change a processing region (that is, a region for acquiring a deviation) to a region for which a deviation amount is not held (or a region for which the reliability of a deviation amount is less than a certain value) when the reliability (calculated by the reliability calculation unit 580) of the held deviation amount exceeds the certain value (predetermined threshold). Alternatively, when the reliability of a deviation amount of each region does not increase for a long time, the accumulation unit 690 instructs the left/right up-down deviation calculation unit 360 to change the processing region.

In this manner, the processing region (the region for acquiring the deviation) is changed to a different region when the reliability of the deviation held in the accumulation unit 690 exceeds the predetermined threshold according to the third embodiment. Thus, the deviation amount for a long time can be acquired in a large number of regions, and a geometric correction value with good precision can be calculated. Further, even in a situation where the shading of the screen does not constantly change, such as when traveling on a straight road on a highway and when the vehicle is stopped, it is possible to shorten a period for calculating the up-down deviation.

[Fourth Embodiment]

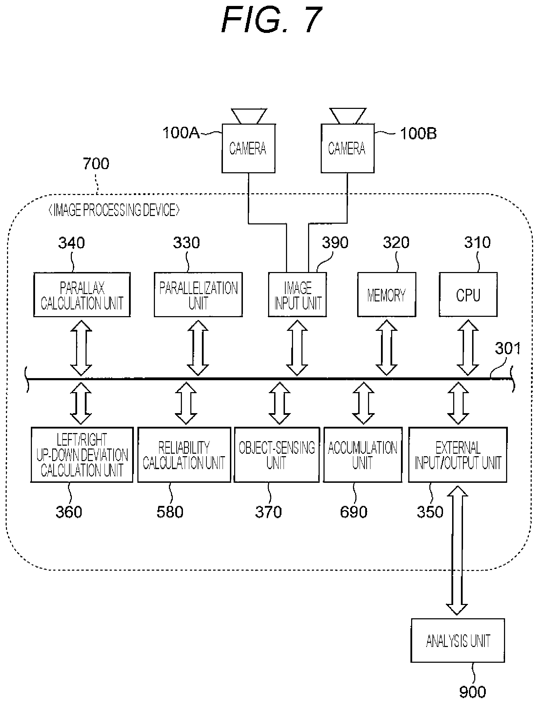

Next, a fourth embodiment will be described with reference to FIG. 7.

A basic configuration of an image processing device 700 of the fourth embodiment is substantially the same as those of the image processing devices 300, 500, and 600 of the first to third embodiments described above. In the fourth embodiment, the external input/output unit 350 outputs the geometric correction value or the deviation amount of the parallelization unit 330 or the left/right up-down deviation calculation unit 360 described above.

Another analysis unit 900, connected to the external input/output unit 350 to be capable of communicating, collects and holds geometric correction values which are output results of a plurality of image processing devices, and a camera that detects an abnormal value is instructed to stop the operation based on a statistical result thereof (for example, by calculating a variance value or the like). For example, when the analysis unit 900 detects an abnormality in the cameras 100A and 100B that input images to the image processing device 700 (in other words, detects the image processing device 700 that exceeds a predetermined variation threshold), the analysis unit 900 instructs the image processing device 700 to stop the operations of the cameras 100A and 100B or the like. Then, the image processing device 700 (CPU 310) stops a system in response to an input from the analysis unit 900 received via the external input/output unit 350, and outputs a signal indicating that the system has stopped from the external input/output unit 350 to notify a user, stops all systems including the other image processing devices, or switches to an alternative sensor.

In this manner, the image processing device 700 performs stopping the system or the like in response to the input from the analysis unit 900 received via the external input/output unit 350 when the analysis unit 900 that holds the output results of the plurality of image processing devices detects the image processing device 700 that exceeds the predetermined variation threshold according to the fourth embodiment. Thus, it is possible to detect unexpected deformation in a structure of the cameras while linking the plurality of image processing devices (stereo cameras) and to stop the system safely.

Further, the image processing device 700 (left/right up-down deviation calculation unit 360) may change a processing region (that is, a region for acquiring a deviation) (instead of stopping the system) in response to the input from the analysis unit 900 received via the external input/output unit 350 in the fourth embodiment.

[Fifth Embodiment]

Next, a fifth embodiment will be described.

Since a basic configuration of the fifth embodiment is almost the same as those of the first to fourth embodiments described above, the illustration thereof is omitted. In the fifth embodiment, the parallax calculation unit 340 (instead of the left/right up-down deviation calculation unit 360) calculates a deviation amount in the up-down direction simultaneously when calculating parallax, and creates an up-down deviation map (the deviation amount in the up-down direction for each image coordinate). With (referring to) this up-down deviation map, the left/right up-down deviation calculation unit 360 determines a geometric correction value for the parallelization unit 330.

In this manner, the parallax of a pair of images acquired from the pair of cameras 100A and 100B is calculated at the time of acquiring the deviation, and a vertical deviation amount of the parallax calculation unit 340 that outputs the vertical deviation amount of the pair of images simultaneously with the parallax calculation is referred to, that is, the parallax calculation unit 340 is mounted, on an FPGA circuit according to the fifth embodiment. Thus, a computational load of the CPU 310 can be further reduced (in other words, processing can be made more efficient), and correction processing can be executed even with a low-cost device.

Incidentally, a target of the present invention reaches a method for producing geometric correction value data and a program for obtaining a geometric correction value in addition to the above-described image processing device and a camera system using the image processing device. The method for producing geometric correction value data of the present invention includes, as an example, a method including: a step of acquiring a pair of images from a pair of cameras; a step of determining a first one region from one image between the pair of images, retrieving a first other region corresponding to the first one region from the other image, and acquiring a first deviation between the first one region and the first other region; a step of determining a second one region, different from the first one region, from the one image, retrieving a second other region corresponding to the second one region from the other image, and acquiring a second deviation between the second one region and the second other region; and a step of determining a geometric correction value for each pixel of the images from the first deviation and the second deviation.

Further, the program for obtaining a geometric correction value of the present invention includes, as an example, a program that causes a computer to execute: a step (process) of acquiring a pair of images from a pair of cameras; a step (process) of determining a first one region from one image between the pair of images, retrieving a first other region corresponding to the first one region from the other image, and acquiring a first deviation between the first one region and the first other region; a step (process) of determining a second one region, different from the first one region, from the one image, retrieving a second other region corresponding to the second one region from the other image, and acquiring a second deviation between the second one region and the second other region; and a step (process) of determining a geometric correction value for each pixel of the images from the first deviation and the second deviation.

Incidentally, not all the above-described processing steps are indispensable.

Further, the description has been given by exemplifying the stereo camera system having two cameras as the image capturing device in the above embodiments, but the present invention can be applied to a system having a plurality of image capturing devices, and may be applied to a system having three or more image capturing devices, and stereo processing is not always essential.

Incidentally, the present invention is not limited to the above-described embodiments and includes various modifications. For example, the above-described embodiments have been described in detail in order to describe the present invention in an easily understandable manner, and are not necessarily limited to those including the entire configuration that has been described above. Further, some configurations of a certain embodiment can be substituted by configurations of another embodiment, and further, a configuration of another embodiment can be also added to a configuration of a certain embodiment. Further, addition, deletion or substitution of other configurations can be made with respect to some configurations of each embodiment.

Further, the above-described respective configurations may be configured such that some or the whole of them may be implemented by hardware by being designed using an integrated circuit or the like or by a processor that executes a program. Information such as programs, tables, and files that realize the respective functions can be installed in a storage device such as a memory, a hard disk, and a solid state drive (SSD) , or a recording medium such as an IC card, an SD card, and a DVD. Further, only a control line and an information line considered to be necessary for the description have been illustrated, and all control lines and information lines required for a product are not illustrated. It may be considered that most of the configurations are practically connected to each other.

Reference Signs List

1        obstacle sensing system (in-vehicle stereo camera system)

100A, 100B camera
200 vehicle
210 obstacle
300 image processing device (first embodiment)
301 communication line
310 CPU
320 memory
330 parallelization unit
340 parallax calculation unit
350 external input/output unit
360 left/right up-down deviation calculation unit
370 object-sensing unit
390 image input unit
500 image processing device (second embodiment)
580 reliability calculation unit
600 image processing device (third embodiment)
690 accumulation unit
700 image processing device (fourth embodiment)
900 analysis unit

**Claims**

1. An image processing device configured to:

   acquire a pair of images from a pair of cameras;
   determine a first one region from one image between the pair of images, retrieve a first other region corresponding to the first one region from an other image, and acquire a first deviation between the first one region and the first other region;
   determine a second one region, different from the first one region, from the one image, retrieve a second other region corresponding to the second one region from the other image, and acquire a second deviation between the second one region and the second other region; and
   determine a geometric correction value for each pixel of the images from the first deviation and the second deviation.

2. The image processing device according to claim 1, wherein
   a deviation of the images in a vertical direction is acquired as the first deviation and the second deviation.

3. The image processing device according to claim 1, wherein
   the geometric correction value is determined from the first deviation and the second deviation based on a pattern indicating a relation between the first deviation and the second deviation measured in advance, and the geometric correction value for each pixel of the images.

4. The image processing device according to claim 1, wherein

   the first and second one regions and the first and second other regions are formed of at least a region including a center of an optical axis of the image and a region including four points in all quarters around the center of the optical axis, and
   a deviation amount in each of at least the region including the center of the optical axis of the image and the region including the four points in all the quarters around the center of the optical axis is calculated, and the geometric correction value is calculated.

5. The image processing device according to claim 1, comprising

   a reliability calculation unit that calculates reliability of the first deviation and the second deviation,
   wherein the geometric correction value is determined in accordance with the reliability.

6. The image processing device according to claim 5, further comprising

an accumulation unit that holds the first deviation and the second deviation,

wherein a region for acquiring the first deviation or the second deviation is changed to a different region when the reliability of the first deviation or the second deviation held in the accumulation unit exceeds a predetermined threshold.

**7.** The image processing device according to claim 1, comprising

an external input/output unit connected to an analysis unit that holds output results of a plurality of the image processing devices,

wherein a region for acquiring the first deviation or the second deviation is changed in response to an input from the analysis unit received via the external input/output unit.

**8.** The image processing device according to claim 1, comprising

an external input/output unit connected to an analysis unit that holds output results of a plurality of the image processing devices,

wherein, when the analysis unit detects an image processing device that exceeds a predetermined variation threshold, a system is stopped in response to an input from the analysis unit received via the external input/output unit, a signal indicating that the system has stopped is output from the external input/output unit to notify a user, all systems are stopped, or switching to an alternative sensor is performed.

**9.** The image processing device according to claim 1, comprising

a parallax calculation unit that calculates parallax between the pair of images and outputs a vertical deviation amount between the pair of images simultaneously with the parallax calculation,

the vertical deviation amount is referred to when acquiring the first deviation and the second deviation.

FIG. 1

EP 4 015 990 A1

EP 4 015 990 A1

## FIG. 2

# FIG. 3

100A — CAMERA    CAMERA — 100B

300

⟨IMAGE PROCESSING DEVICE⟩

| 340 | 330 | 390 | 320 | 310 |
|---|---|---|---|---|
| PARALLAX CALCULATION UNIT | PARALLELIZATION UNIT | IMAGE INPUT UNIT | MEMORY | CPU |

301

| LEFT/RIGHT UP-DOWN DEVIATION CALCULATION UNIT | OBJECT-SENSING UNIT | EXTERNAL INPUT/OUTPUT UNIT |
|---|---|---|
| 360 | 370 | 350 |

# FIG. 4

400

401

404

403

402

405

# FIG. 5

# FIG. 6

# FIG. 7

## INTERNATIONAL SEARCH REPORT

| | International application No. |
|---|---|
| | PCT/JP2020/028624 |

### A. CLASSIFICATION OF SUBJECT MATTER
G01B 11/245(2006.01)i; G01C 3/06(2006.01)i; H04N 17/00(2006.01)i; H04N 13/246(2018.01)i
FI: G01C3/06 110V; G01B11/245 H; H04N13/246; H04N17/00 200
According to International Patent Classification (IPC) or to both national classification and IPC

### B. FIELDS SEARCHED
Minimum documentation searched (classification system followed by classification symbols)
G01B11/245; G01C3/06; H04N17/00; H04N13/246

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2012-212428 A (SHARP CORP.) 01 November 2012 (2012-11-01) paragraphs [0039]-[0076], [0125]-[0139], fig. 1-9, 19-22 | 1, 2, 4-9<br>3<br>7, 8 |
| Y | JP 2019-056606 A (HITACHI AUTOMOTIVE SYSTEMS, LTD.) 11 April 2019 (2019-04-11) paragraphs [0039]-[0045] | 3 |
| A | JP 11-325889 A (FUJI HEAVY INDUSTRIES LTD.) 26 November 1999 (1999-11-26) entire text, all drawings | 7 |
| A | JP 2017-040549 A (SHARP CORP.) 23 February 2017 (2017-02-23) entire text, all drawings | 8 |

☐ Further documents are listed in the continuation of Box C.      ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 October 2020 (30.10.2020) | 10 November 2020 (10.11.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2020/028624

| Patent Documents referred in the Report | Publication Date | Patent Family | Publication Date |
|---|---|---|---|
| JP 2012-212428 A | 01 Nov. 2012 | US 2014/0009577 A1 paragraphs [0074]-[0137], [0217]-[0241], fig. 1-9B, 19-22 WO 2012/128314 A1 | |
| JP 2019-056606 A | 11 Apr. 2019 | WO 2019/058729 A1 | |
| JP 11-325889 A | 26 Nov. 1999 | US 6373518 B1 entire text, all drawings EP 957642 A2 | |
| JP 2017-040549 A | 23 Feb. 2017 | (Family: none) | |

Form PCT/ISA/210 (patent family annex) (January 2015)

**EP 4 015 990 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004354257 A